(19) Europäisches Patentamt
European Patent Office
Office européen des brevets

(11) Numéro de publication : **0 357 479 B1**

(12) # FASCICULE DE BREVET EUROPEEN

(45) Date de publication du fascicule du brevet : **15.04.92 Bulletin 92/16**

(51) Int. Cl.$^5$ : **B01J 20/26,** G01N 30/48

(21) Numéro de dépôt : **89402165.8**

(22) Date de dépôt : **28.07.89**

(54) **Matériau capable de fixer les substances biologiques, et ses applications notamment comme support de chromatographie d'affinité.**

(30) Priorité : **02.08.88 FR 8810435**

(43) Date de publication de la demande : **07.03.90 Bulletin 90/10**

(45) Mention de la délivrance du brevet : **15.04.92 Bulletin 92/16**

(84) Etats contractants désignés : **AT BE CH DE ES FR GB GR IT LI LU NL SE**

(56) Documents cités :
**EP-A- 0 130 898**
**US-A- 4 335 017**
**PATENT ABSTRACTS OF JAPAN vol. 12 no. 40, 05.02.88**
**PATENT ABSTRACTS OF JAPAN vol. 11, no. 365, 27.11.87**

(73) Titulaire : **CENTRE NATIONAL DE LA RECHERCHE SCIENTIFIQUE (CNRS)**
**15, Quai Anatole France**
**F-75700 Paris Cedex 07 (FR)**

(72) Inventeur : **Jozefonvicz née Dorgebray, Jacqueline**
**65 Deuxième Avenue**
**F-60260 Lamorlaye (FR)**
Inventeur : **Santarelli, Xavier-François**
**5 rue Masse**
**F-45000 Orléans (FR)**
Inventeur : **Muller, Daniel André**
**3 Impasse Guynemer**
**F-95230 Soisy-sous-Montmorency (FR)**

(74) Mandataire : **Phélip, Bruno et al**
**c/o Cabinet Harlé & Phélip 21, rue de La Rochefoucauld**
**F-75009 Paris (FR)**

EP 0 357 479 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne un matériau capable de fixer les substances biologiques (molécules et cellules), ainsi que son utilisation comme support de chromatographie liquide d'affinité haute performance, pour purifier ou séparer lesdites substances biologiques, ainsi que pour l'immobilisation réversible de substances moléculaires.

L'une des difficultés de l'utilisation de la chromatographie liquide à des fins industrielles est la résistance mécanique de la matrice solide. De ce point de vue, la silice par exemple est un bon support de base. Cependant, son utilisation à l'état natif n'est pas possible, dans la mesure où elle est porteuse de groupes silanol chargés négativement donnant lieu à des interactions parasites qui gênent la chromatographie d'affinité. En outre, la silice n'est pas stable à des valeurs de pH supérieures à 8 ou 9.

Par ailleurs, pour satisfaire aux exigences des techniques de séparation par affinité des molécules biologiques, il faut que le support, en dehors d'une grande résistance mécanique, d'une part, ne présente pas de sites d'adsorption irréversible, et, d'autre part, présente des sites à forte affinité spécifique, fixés de façon irréversible, et stables chimiquement.

La présente invention permet d'atteindre ces résultats.

Contrairement à ce qui a été rapporté jusqu'à présent, selon l'invention, un support minéral poreux subit au moins deux imprégnations successives : la première notamment avec un dextrane ou polysaccharide faiblement cationique modifié par l'introduction sur le dextrane ou le polysaccharide d'une faible proportion de fonctions cationiques, telles que la fonction diéthylaminoéthyle (DEAE), ces charges cationiques devant pratiquement compenser exactement les charges anioniques des groupes silanol de la silice native, ce qui constitue une originalité de la présente invention ; la deuxième (ou la dernière) est effectuée par couplage chimique irréversible sur la couche de DEAE dextrane, par exemple, d'un polymère soluble fonctionnalisé pour avoir une affinité spécifique pour telle ou telle substance biologique, protéines diverses, acides nucléiques, cellules, etc. La présence d'une couche intermédiaire conduit à des résultats améliorés, notamment à une élution certaine de la substance biologique, avec une résolution plus élevée.

La présente invention a donc d'abord pour objet un matériau granulaire, capable de fixer des substances biologiques, caractérisé par le fait qu'il est constitué d'un support poreux granulaire, porteur de charges négatives ou positives, revêtu sur sa surface par des couches successives, à savoir :

– une première couche d'imprégnation d'un polymère hydrophile, porteur de charges opposées à celles du support, la quantité desdites charges présentes sur ledit polymère étant sensiblement égale à celle des charges présentes à la surface du support ; et

– une autre couche, fixée à la première par couplage chimique irréversible, d'un autre polymère hydrophile, fonctionnel, à savoir portant des fonctions conférant audit polymère hydrophile fonctionnel une affinité spécifique mais réversible pour au moins une substance biologique (polymère biofonctionnel).

La présente invention a également pour objet un matériau granulaire, capable de fixer des substances biologiques, caractérisé par le fait qu'il est constitué d'un support poreux granulaire, porteur de charges négatives ou positives, revêtu sur sa surface par des couches successives, à savoir :

– une première couche d'imprégnation d'un polysaccharide, porteur de charges opposées à celles du support, la quantité desdites charges présentes sur ledit polysaccharide étant sensiblement égale à celle des charges présentes à la surface du support ; et

– au moins une autre couche, fixée à la première par couplage chimique irréversible, d'un autre polymère hydrophile, fonctionnel, à savoir portant des fonctions conférant audit polymère hydrophile fonctionnel une affinité spécifique mais réversible pour au moins une substance biologique (polymère biofonctionnel).

Selon une autre forme de réalisation de l'invention, au moins une couche intermédiaire d'un polymère hydrophile est insérée et fixée à la première couche (ou à la couche précédente) par couplage chimique, avant fixation de la couche du polymère biofonctionnel.

Le matériau qui fait l'objet de la présente invention est différent de celui décrit dans le brevet américain n° 4 335 017. Ce dernier vise un matériau composite dans lequel il doit y avoir le minimum de gel déformable à l'extérieur de la structure de pores internes du matériau de support rigide poreux, le matériau composite se présentant sous la forme de particules discrètes, permettant une manipulation, un garnissage de colonne et un fonctionnement de colonne plus aisés. Ce but est atteint par un matériau particulaire qui comprend des particules discrètes de support rigide poreux et un xérogel déformable retenu dans et remplissant sensiblement la structure de pores des particules de support, ce xérogel déformable, qui peut être couplé à une substance biologiquement active, étant capable de sorber les espèces chimiques à partir d'une solution.

Il n'est donc pas question d'une couche d'imprégnation d'un polymère hydrophile porteur de charges opposées à celles du support, la quantité desdites charges présentes sur ledit polymère étant sensiblement égale à celle des charges présentes à la surface du support, ce qui constitue la première caractéristique du matériau

conforme à la présente invention. Selon celle-ci, on vise, non pas à boucher les pores du matériau particulaire comme cela ressort du brevet américain n° 4 335 017, mais à ce que la surface externe du matériau particulaire soit le plus possible recouverte du polymère de première couche, pour établir finalement, après application des autres couches, une surface de contact la plus importante possible du matériau lors de son application comme support de chromatographie d'affinité.

Le support poreux granulaire est avantageusement un support minéral, lequel peut être choisi parmi la silice, l'alumine, les dérivés synthétiques ou naturels des verres, les silicates et le kaolin.

A titre d'exemple de support poreux minéral, on peut mentionner une silice native porteuse de groupes silanol chargés négativement, le polymère hydrophile ou le polysaccharide constituant la première couche d'imprégnation étant alors porteurs de fonctions cationiques capables de compenser les charges anioniques de la silice native.

La silice native présente avantageusement une taille moyenne comprise entre 5 et 300 μm, un diamètre moyen de pores compris entre 5 et 400 nm, et une surface moyenne spécifique comprise entre 5 et 500 $m^2/g$.

Les fonctions cationiques portées par le polymère hydrophile ou le polysaccharide constituant la première couche sont, par exemple, des fonctions diéthylaminoéthyle (DEAE).

Le polymère hydrophile constituant la première couche et les couches intermédiaires éventuelles, peut être réticulé ou non. On préfère, en général, que le polymère soit réticulé, ce qui assure une bonne imprégnation du support minéral.

Le polysaccharide constituant la première couche, et les couches intermédiaires éventuelles, est avantageusement choisi parmi les dextranes, les agaroses et autres polysaccharides naturels ou synthétiques, hydrosolubles.

De tels polysaccharides peuvent être réticulés, après imprégnation, par exemple, à l'aide de l'éther diglycidylique du butanediol-1,4 (BDDE), de l'épichlorhydrine ou de la glutaraldéhyde.

Le polymère biofonctionnel est fixé au polymère constituant la couche précédente au moyen d'un agent de couplage, tel que les bis-époxirannes, le carbonyldiimidazole (CDI), la N-éthoxycarbonyl-2-éthoxy-1,2-dihydroquinoléine (EEDQ), un tel agent pouvant également être utilisé pour fixer entre elles les couches intermédiaires dans le cas où de telles couches sont envisagées.

Le polymère biofonctionnel, hydrosoluble, présente une affinité vis-à-vis des substances biologiques, soit par sa nature même, soit par suite de modifications chimiques. Ainsi, les fonctions conférant l'affinité vis-à-vis des substances biologiques peuvent être de type carboxylique et/ou sulfonate et/ou amino-acides et leurs dérivés, en proportions variables. Le polysaccharide peut cependant garder des unités glucosyle non substituées, telles que les motifs (A) de la formule (I) donnée ci-après, dans la mesure où l'affinité recherchée est suffisante.

Le polymère biofonctionnel est réticulé, après imprégnation, par exemple, à l'aide des mêmes agents de réticulation que ceux indiqués ci-dessus pour la première couche et les couches intermédiaires éventuelles.

Le polymère biofonctionnel hydrosoluble est choisi parmi les polysaccharides tels que les héparines, les héparines modifiées, les fucanes, le dermatan sulfate, les héparans sulfates et autres polysaccharides naturels ou modifiés, les polymères vinyliques, tels que les dérivés de polystyrène, les polyacrylates ou les polydiènes, les polyuréthannes et les polymères porteurs d'amino-acides, de peptides, de ligands (par exemple, lectine, agglutinine), de récepteurs cellulaires et de colorants.

Ainsi, le polymère biofonctionnel hydrosoluble peut être un dérivé du dextrane correspondant à la formule générale (I) :

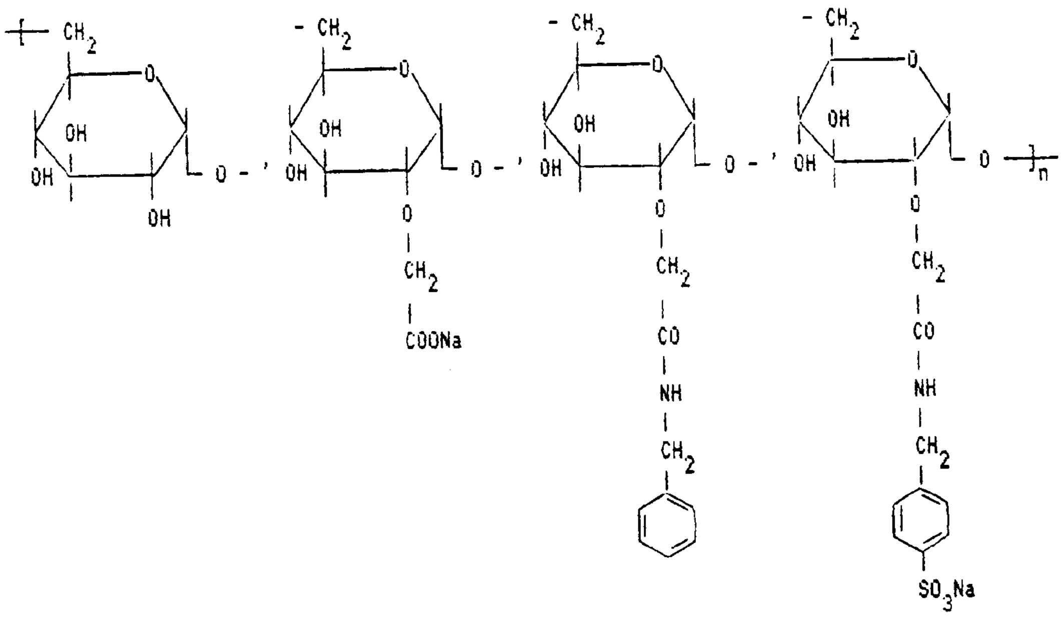

(I)

(A) (B) (C) (D)

dont la proportion des motifs (A), (B), (C) et (D) est variable.

Le polymère biofonctionnel hydrosoluble peut être un dérivé du dextrane où les motifs (C) et (D), présentés dans la formule précédente, sont remplacés par des motifs (E) :

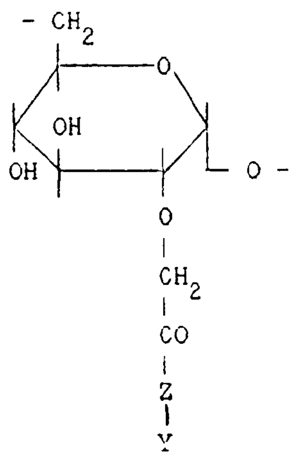

(E)

où :

– Z représente une simple liaison ou une chaîne d'espacement telle que $-(CH_2)_m-$ avec m = entier supérieur ou égal à 1 ; et

– Y représente un ou plusieurs restes d'amino-acides ou de leurs dérivés.

Le polymère biofonctionnel hydrosoluble peut également être un dextrane dont la chaîne est substituée par un ou plusieurs groupes, identiques ou différents, appartenant aux catégories suivantes :

$$-Z_1-A_1$$
$$-Z_1-A_1-Z_2-A_2$$
$$-Z_1-A_1-A_3-A_2$$
$$-Z_1-A_1-A_4$$

où :

– $Z_1$ représente une chaîne d'espacement ;

– $Z_2$ représente une chaîne de liaison ;

– $A_1$ représente un représente un reste phosphate ;

– $A_2$ représente le reste d'une base purique ou d'une base pyrimidique ;
– $A_3$ représente un reste de sucre ; et
– $A_4$ représente un reste d'une molécule intervenant dans la structure polaire des divers phospholipides.

La chaîne d'espacement $Z_1$ est notamment choisie parmi les restes :

. $-(CH_2)_n-$, n valant de 1 à 6, éventuellement rendu hydrophile par remplacement d'au moins un H par un OH ; ou

. $-SO_2-NH-(CH_2)_m-$, m valant de 1 à 6, le reste $-(CH_2)_m-$ étant éventuellement rendu hydrophile par remplacement d'au moins un H par un OH ; et

.

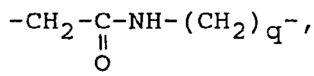

q valant de 1 à 6, le reste $-(CH_2)_q-$ étant éventuellement rendu hydrophile par remplacement d'au moins un H par un OH.

Quant à la chaîne de liaison $Z_2$, elle est notamment constituée par la chaîne $-(CH_2)_p-$, p valant de 1 à 6, le reste $-(CH_2)_p-$ étant éventuellement rendu hydrophile par remplacement d'au moins un H par un OH.

En ce qui concerne le reste $A_2$, on peut mentionner, à titre d'exemples, les restes des bases puriques majeures que sont l'adénine et la guanine, ainsi que les restes des bases pyrimidiques majeures que sont la cytosine, la thymine et l'uracile.

Le reste $A_3$ représente notamment un reste de sucre, relié par son groupement $-CH_2-$ au reste phosphate ; à titre d'exemple, on peut citer un reste de pentose, en particulier, le reste du D-ribose (ou du 2-désoxy-D-ribose) de formule :

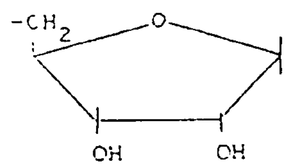

Quant au reste $A_4$, il représente notamment une molécule estérifiée de choline, d'éthanolamine, de sérine, de glycérol ou d'inositol.

D'autres détails concernant ces dextranes phosphorylés seront trouvés dans la demande de brevet européen n° 304 377.

Le polymère biofonctionnel hydrosoluble peut aussi être l'héparine, modifiée ou non, qui est un glycosaminoglycanne naturel présent dans le règne animal.

Les polymères biofonctionnels hydrosolubles peuvent également être des fucanes, produits naturels dérivés des algues marines.

Egalement, le polymère biofonctionnel peut être le dermatan sulfate ou un héparan sulfate, polysaccharides naturels hydrosolubles.

Le polymère biofonctionnel hydrosoluble peut être un polymère vinylique, par exemple, un dérivé du polystyrène correspondant à la formule générale suivante :

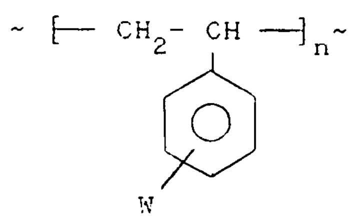

(II)

où :

- W représente un ou plusieurs restes de molécules, telles que définies dans la demande de brevet français n° 87-11813 du 21 août 1987, ou encore au moins un reste $-SO_3^-$, ou $-SO_2-R$ (R représentant le reste d'un amino-acide ou de ses dérivés).

Les molécules biologiques sont les protéines, les protéases, les anticorps, les antigènes, les enzymes, et

les hormones.

Les matériaux selon l'invention présentent une grande stabilité chimique, dans une large gamme de pH (3 à 10 environ) et thermique (jusqu'à 80°C). Ils peuvent être introduits à sec en colonne, lavés par de l'eau, des solutions tamponnées, puis par des solutions aqueuses de chlorure de sodium (jusqu'à 3M NaCl). Ils peuvent aussi être introduits en colonne par voie humide et percolation de la dispersion.

La capacité de ces matériaux est élevée. Elle peut atteindre 200 mg de ligand par gramme de support sec.

Les matériaux selon la présente invention sont préparés des façons suivantes :

– On imprègne un support de base sous forme de billes ou perles (silice) avec une solution concentrée du polymère de première couche (passivation de la silice) ; une fois l'imprégnation réalisée, on procède habituellement à la réticulation de cette première couche d'une façon connue en soi et on sèche, puis, de la même façon, on fixe la couche suivante, ou successivement les couches suivantes.

– Conformément à un premier mode de réalisation, on utilise un polymère de deuxième ou dernière couche qui est lui-même biologiquement actif (c'est le cas notamment de la préparation décrite aux Exemples 1 et 2).

– Conformément à un second mode de réalisation de l'invention, on utilise un polymère de deuxième ou dernière couche qui est en lui-même non biologiquement actif, puis on effectue la fonctionnalisation (c'est le cas notamment de la préparation décrite à l'Exemple 4).

La présente invention porte également sur l'application du matériau tel que défini ci-dessus à la purification ou à la séparation de substances biologiques, cette application étant caractérisée par le fait que l'on élue sur ledit matériau une solution contenant les substances biologiques que l'on souhaite purifier ou isoler, la couche de polymère biofonctionnel étant telle que le matériau fixe sélectivement soit les molécules que l'on souhaite purifier ou isoler, soit les impuretés non désirées.

On peut ainsi mentionner :

– la séparation et la purification d'antithrombine III à partir d'un matériel biologique contenant cette protéine, tel que sang, placenta, fractions plasmatiques, sérum ;

– la séparation et la purification des facteurs de la coagulation, tels que les facteurs II, VII, VIII, IX, X, la protéine C et la protéine S, et de protéines telles que le cytochrome C, le plasminogène, le lysozyme et la fibronectine, à partir d'un matériel biologique contenant ces facteurs ou protéines, tel que sang, placenta, fractions plasmatiques, sérum ;

– la séparation des facteurs activés de la coagulation, tels que les facteurs II activé, IX activé, X activé, dans des solutions contenant lesdits facteurs non activés ;

– la concentration d'une solution de protéines très diluée en milieu aqueux et l'élimination de l'eau ;

– la purification et la concentration des facteurs de croissance présentant une affinité pour l'héparine ou ses homologues, à partir d'extraits aqueux, par exemple de solutions tamponnées, contenant lesdits facteurs ; et

– la séparation et la purification du deuxième cofacteur de l'héparine, à partir d'un matériel biologique le contenant, tel que sang, placenta, fractions plasmatiques, sérum.

Dans le cas des matériaux selon l'invention, pour lesquels le polymère biofonctionnel est un dextrane phosphorylé, on peut mentionner, en particulier, l'adsorption spécifique des différents types d'anticorps développés par les malades lupiques (anticorps anti-ADN, anticoagulants circulants et anti-phospholipides).

La présente invention porte également sur l'utilisation du matériau tel que défini ci-dessus pour l'immobilisation réversible de substances moléculaires, telles qu'antigènes, anticorps et enzymes.

Selon l'invention, les substances à purifier ou à concentrer sur les matériaux peuvent également être des cellules.

La présente invention possède le double avantage suivant :

– d'une part, le matériau granulaire de l'invention a une tenue mécanique lui permettant d'être mis en oeuvre dans des procédés de chromatographie haute pression (HPLC) ou de chromatographie préparative, se prêtant bien à des opérations industrielles, ainsi qu'il est connu de l'homme du métier ;

– d'autre part, l'invention possède l'avantage de pouvoir isoler, à l'état pur, avec une résolution élevée, une substance biologique, telle que l'antithrombine III ou la thrombine, alors que ces composés sont retenus de manière irréversible sur des supports de silice non modifiés conformément à l'invention. On constate qu'une silice, même traitée par fixation d'une couche de DEAE dextrane commercial, présentant alors un excédent de charges positives, conduit aussi à des adsorptions irréversibles de protéines, telles que le cytochrome C, le plasminogène et le lysozyme, par exemple.

Les exemples suivants sont présentés pour illustrer davantage la présente invention, sans pour autant en limiter la portée. Ils portent, d'une part, sur la préparation de matériaux selon l'invention, et, d'autre part, sur l'application de tels matériaux à titre de supports de chromatographie d'affinité.

Dans un souci de simplification et de clarté, les matériaux selon l'invention sont désignés par les substances qui constituent le support (noyau) et les différentes couches successives, dans leur ordre d'introduction.

Exemple 1 : Préparation du matériau silice-DEAE dextrane réticulé-héparine (Si-DEAE Dext.-Hép.)

1ère étape : Préparation du diéthylaminoéthyl dextrane (DEA dext.)

On agite une solution de 40 g (1 mole) de NaOH dans 80 ml d'eau bidistillée, avec 20 g (0,122 mole) de dextrane (Pharmacia - France), de masse molaire comprise entre 10 000 et 50 000 dans 80 ml d'eau, pendant 30 minutes, à 4°C. Ensuite, on ajoute, en plusieurs fractions, 21 g (0,122 mole) de chlorhydrate de chlorure de DEAE. On agite le mélange à 4°C, pendant 10 minutes, puis on le chauffe à 60°C, pendant une durée de 15 à 60 minutes. Après la réaction, on refroidit le mélange dans un bain de glace, et on ajuste son pH à une valeur de 9,0 à l'aide d'HCl concentré. On fait précipiter le DEAE-dextrane par le méthanol, et on filtre la suspension avec aspiration douce dans un entonnoir fritté. Enfin, on lave le gâteau de filtration avec de l'éthanol, que l'on soutire à travers le filtre. Le produit partiellement séché est broyé pour donner une poudre et l'alcool restant est éliminé sous vide à 40°C. Les caractéristiques du DEAE-dextrane obtenu ont été déterminées par titrage et par analyse élémentaire. Le pourcentage d'unités dextrane portant des groupes DEAE a varié de 0,3 à 24% suivant le dextrane employé. On a plus particulièrement retenu les dextranes portant 3 à 10% environ de groupes DEAE.

2ème étape : Préparation de perles de silice enrobées de DEAE-dextrane (Si-DEAE Dext.)

On réalise l'enrobage, par une couche de DEAE dextrane, tel que préparé ci-dessus, de perles de silice XO 015 ou XO 075 (IBF), ayant les caractéristiques ci-dessous :

| Silice | XO 015 | XO 075 |
|---|---|---|
| ∅ pore | 125 nm | 30 nm |
| Surface spécifique | 25 $m^2/g$ | 100 $m^2/g$ |
| volume poreux | 0,96 ml/g | 0,96 ml/g |
| Taille des particules | 40-100 µm | 40-100 µm |

10 g de la silice choisie sont ajoutés doucement, pendant 2 heures, dans 25 ml d'une solution aqueuse alcaline à 8% en poids par volume (pH 11) d'un DEAE-dext., provenant de la première étape. Après imprégnation, le support est récupéré, séché sous vide à 80°C. Le support imprégné sec est remis en suspension dans 20 ml d'éther diéthylique à 40°C, avec 60 mg de BDDE (agent réticulant). Le mélange est chauffé au reflux pendant 15 heures. La phase solide est recueillie, lavée successivement par de la soude 0,1M, une solution aqueuse de NaCl 2M, et, finalement, par l'eau distillée. La quantité de polysaccharide imprégnant le support ainsi modifié est déterminée par le taux de carbone (entre 3 et 5% de carbone) obtenu par analyse élémentaire.

3ème étape : Préparation du matériau de l'intitulé

On ajoute 2 g de perles de silice revêtues par du DEAE-dext., telles que préparées ci-dessus, dans 10 ml de dioxanne sec ; on ajoute 0,5 g de CDI et on agite le mélange pendant 2 heures. On récupère par filtration le produit solide ainsi activé, et on le lave avec 30 ml de dioxanne sec, puis avec 50 ml d'une solution de carbonate de sodium 0,1 M dans l'eau (pH 8,7) (tampon de couplage).

On met en suspension le produit solide dans 10 ml de tampon de couplage (pH : 8,7), et on ajoute 8 g d'héparine brute (Lot PHR 0881-Choay). On agite le mélange pendant 48 heures à la température ambiante. On ajoute alors 10 ml de solution aqueuse de chlorure de sodium (4 M), et on agite pendant 30 minutes.

On filtre le produit solide et on le lave successivement avec 50 ml de solution de NaCl 2 M, 50 ml d'eau distillée, et 10 ml de solution de tampon Tris-HCl 0,1 M (pH : 8,7), afin de désactiver les groupes actifs non couplés et finalement on réalise l'équilibre dans le tampon d'élution ou dans l'eau bidistillée.

Le taux d'héparine fixée est déterminé par mesure de l'activité du filtrat et est égal à 67% de la quantité initiale d'héparine utilisée pour le couplage (11,6 mg/g de support sec).

Exemple 2 : Préparation du matériau silice-DEAE dextrane-CMDBS dextrane (Si-DEAE dext.-CMDBS dext.)

La couche externe est ici constituée par un carboxyméthyl-benzylsulfonate de dextrane noté CMDBS dext., de formule (Ia) :

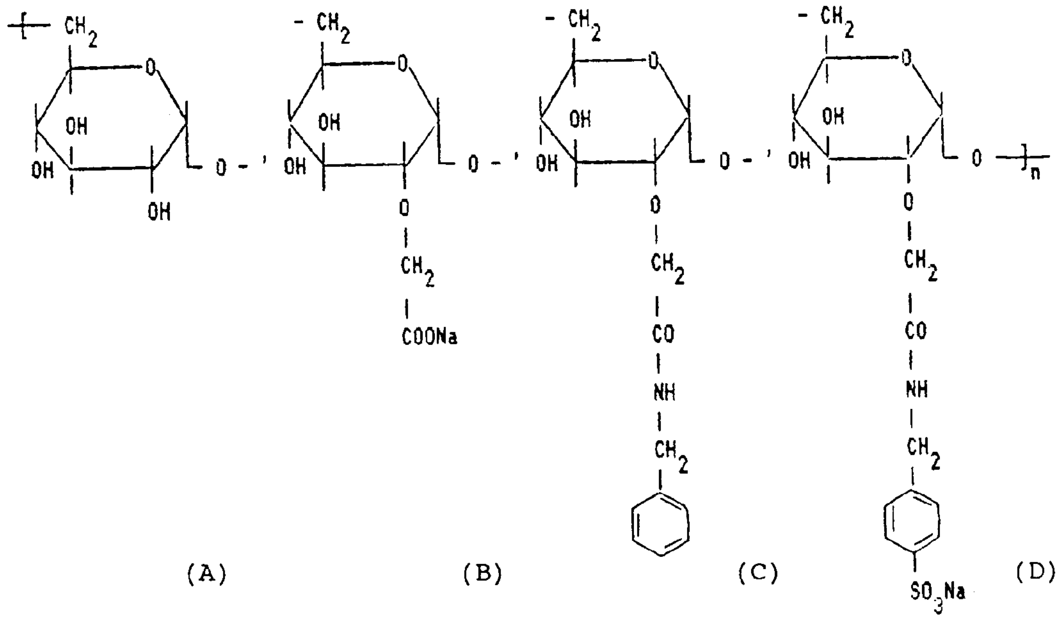

(A) (B) (C) (D)

(Ia)

où les motifs (A), (B), (C) et (D) présentent les pourcentages respectifs de 30, 53, 3 et 17%, ce composé ayant été préparé selon le mode opératoire décrit dans le brevet français n° 2 555 589.

On prépare des perles de silice enrobées de DEAE-dext. comme indiqué à l'Exemple 1 (première et seconde étapes).

Ensuite, on met en suspension 2 g de ces perles sèches dans 15 ml d'éther éthylique préalablement séché. On ajoute 15 µl de BDDE.

On agite le mélange à 40°C pendant 40 minutes, et on élimine le solvant par évaporation. On sèche le produit solide sous vide à 80°C pendant 30 minutes. On lave le produit activé avec 20 ml de NAOH 0,1 M, puis avec 50 ml de NaCl, 2 M. Ensuite, on le met en suspension dans 10 ml de solution aqueuse de soude (pH : 11) et on ajoute 400 mg de CMDBS dext.

On agite le mélange à 40°C pendant 40 minutes. On récupère le produit par filtration, on le sèche sous vide, puis on le lave avec 50 ml de solution aqueuse de NaCl 2 M, et on le reprend avec 10 ml de solution de tampon Tris-HCl 0,1 M (pH : 8,7), afin de désactiver les groupes actifs non couplés.

Le taux de CMDBS dext. fixé, déterminé par microanalyse, est de 90% du CMDBS dext. ajouté, correspondant à environ 90 mg/g de support sec.

Exemple 3 : Préparation du matériau silice-DEAE dextrane réticulé-dextrane phosphorylé (Si-DEAE dext.-Pho dext.)

Première étape : Préparation du dextrane phosphorylé (Pho dext.)

Mode opératoire A :

10 g de carboxy méthyl dextrane correspondant à la formule générale déjà donnée à l'Exemple 2 mais avec seulement des motifs A et B, sont mis en solution dans 150 ml de benzène. 50 ml de chlorure de thionyle sont ajoutés dans le milieu réactionnel, qui est porté à 50°C pendant 24 heures. Le chlorure d'acide est isolé et une condensation d'éthanolamine est effectuée pour aboutir à la formule suivante :

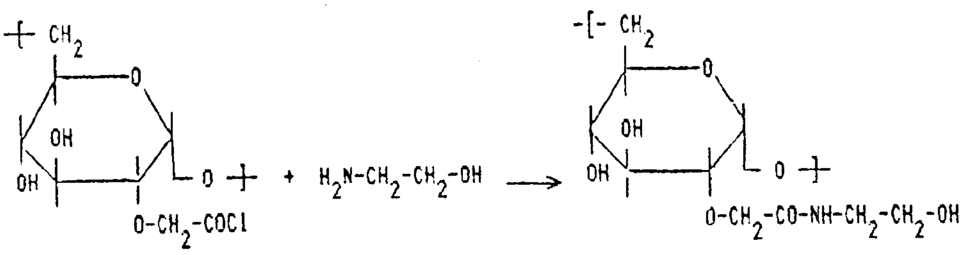

10 g de chlorure d'acide correspondant à environ 40 méq de chlore sont introduits dans 150 ml de pyridine. Un excès d'éthanolamine (120 mmoles) est alors ajouté à 35-40°C pendant une heure puis à 50°C pendant 10 heures.

Mode opératoire B :

10 g de carboxyméthyl dextrane sont dissous dans 70 ml d'eau en ajustant le pH à la valeur 3 par une solution de HCl 1N. On ajoute alors une solution de 20 g de EEDQ dans 160 ml d'éthanol. On agite pendant 30 minutes et 80 mmoles d'éthanolamine sont ajoutées en maintenant le pH à la valeur 9,3. La réaction dure pendant 20 heures. Le solvant est évaporé, et le composé est précipité dans le méthanol puis séché sous vide.

Le dextrane porteur de groupes éthanolamine selon l'essai A ou l'essai B est alors phosphorylé.

La réaction chimique est donnée ci-dessous.

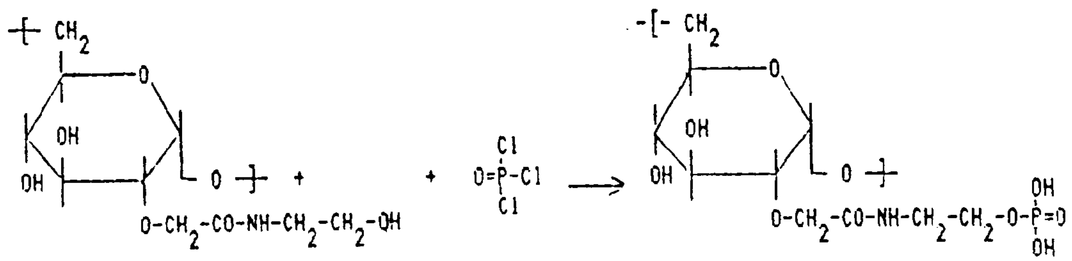

Dextrane phosphorylé
(Pho Dext.)

10 g de dextrane éthanolamine (38 méq) sont introduits dans 100 ml de triméthyl phosphate, $PO(OCH_3)_3$. On ajoute alors 6,4 g de $POCl_3$ (43 méq), et le tout est porté à 60°C pendant 15 heures au moins, puis hydrolysé dans 20 à 30 ml d'eau. Le milieu réactionnel est évaporé pour éliminer une partie de l'eau et la précipitation du dextrane phosphorylé est effectuée dans l'acétone.

L'éthanolamine peut être remplacée par d'autres types d'amines, comme l'hexanolamine, auquel cas le bras espaceur est différent.

Deuxième étape : Préparation du composé de l'intitulé

On procède d'une manière similaire à l'Exemple 2, en utilisant 2 g de perles de Si-DEAE dextrane et 400 mg de Pho-dextrane.

Exemple 4 : Préparation du matériau silice-DEAE dextrane - phénylalanine sulfonate dextrane réticulé (Si-DEAE dext.-Phe$SO_3^-$ dext.)

Première étape : Préparation du matériau Si-DEAE dext. réticulé-dextrane réticulé

2 g de perles sèches de Si-DEAE dextrane réticulé, préparées selon le mode opératoire décrit à l'Exemple 1, sont mis en suspension dans 15 ml d'éther éthylique sec avec 15 µl de BDDE.

Le mélange est agité à 40°C pendant 40 minutes, et le solvant est éliminé par évaporation. Le produit solide est séché sous vide à 80°C. Le support ainsi activé est mis en suspension dans 25 ml de solution aqueuse de soude pH 11 contenant 6% de dextrane T 500 (Pharmacia-France). Le mélange est agité pendant 40 minutes.

Le produit sec est filtré, séché sous vide à 80°C, puis lavé sucessivement par des solutions de soude 0,1 M, de NaCl 2 M et, finalement, par de l'eau bidistillée. Ce matériau Si-DEAE dextrane réticulé-dextrane réticulé contient environ 5,4 g de C par 100 g de support sec.

Deuxième étape : Préparation du matériau de l'intitulé

2 g du matériau obtenu à la première étape sont mis en suspension dans 10 ml de dioxanne. On ajoute 0,5 mg de CDI. Le mélange est agité pendant 2 heures, à la température ambiante. Le produit ainsi activé est récupéré par filtration, lavé successivement avec de l'eau, puis avec une solution de $Na_2CO_3$ 0,1 M (pH 8,7).

Le produit solide est mis en suspension dans 10 ml du tampon de couplage ($Na_2CO_3$ 0,1 M, pH 8,7). On ajoute 30 mg de L-phénylalanine. Le mélange est agité pendant 48 heures à la température ambiante. On ajoute alors 40 mmoles de chlorure de sodium et on agite pendant 30 minutes. Le produit solide est récupéré par filtration et lavé avec de l'eau, une solution aqueuse de NaCl 2 M et 10 ml de solution de tampon Tris-HCl 0,1 M (pH 8,7), afin de désactiver les groupes actifs non couplés, puis, finalement, il est lavé à l'eau et séché.

Le produit sec, contenant environ 10 mg de L-phénylalanine couplée par g de support sec, est mis en suspension dans 50 ml de chlorure de méthylène sec. On ajoute 0,5 mmole d'acide chlorosulfonique. Le mélange est agité doucement à 40°C pendant 4 heures. Le solide est récupéré par filtration, lavé avec 50 ml de chlorure de méthylène, puis avec 50 ml d'un mélange eau-dioxanne. Les groupes chlorosulfonyle substituant le noyau aromatique sont hydrolysés en agitant le support dans 50 ml d'un mélange eau-dioxanne (50% v/v) à température ambiante pendant 20 heures. Le produit est ensuite lavé à l'eau et séché. La détermination des groupes chlorosulfonyle par dosage des ions chlorures montre que le taux de chlorosulfonation est voisin de 80%. Le produit biofonctionnel est représenté par la formule suivante :

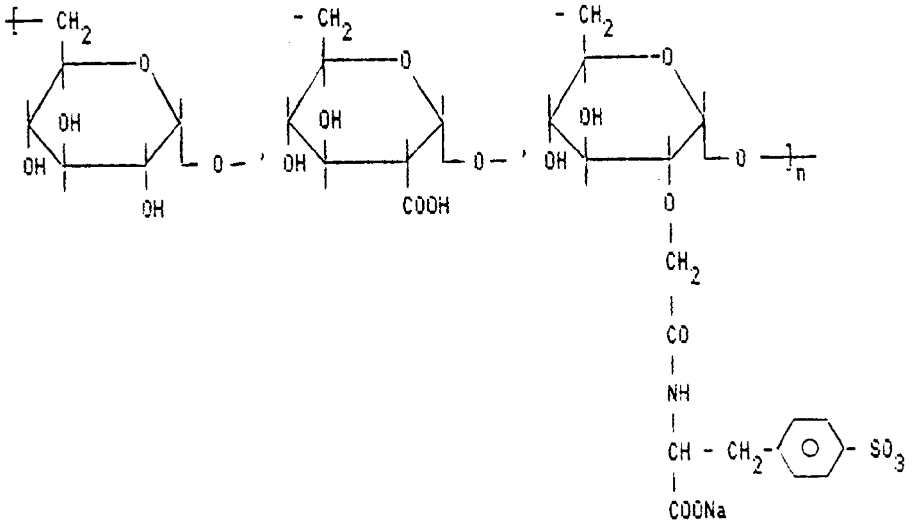

Exemple 5 : Préparation du matériau silice-DEAE dextrane réticulé-ADM dextrane (Si-DEAE dext.-ADM dext.)

On procède comme à l'exemple 4, sauf qu'à la première étape, on utilise, à la place du dextrane T500, le CMDBS dextrane, tel que défini à l'exemple 2, et que l'on sèche, non plus à 80°C, mais à 60°C, et qu'à la seconde étape, on remplace la L-phénylalanine, par l'ester méthylique de l'arginine (ADM) et que l'on n'effectue pas la sulfonation finale.

Le produit sec obtenu contient environ 10 mg d'ester méthylique de l'arginine couplé par g de support sec. Le polymère biofonctionnel de deuxième couche est un dextrane réticulé porteur de fonctions biologiquement activées sulfonate et ester méthylique de l'arginine, et il est représenté par la formule suivante :

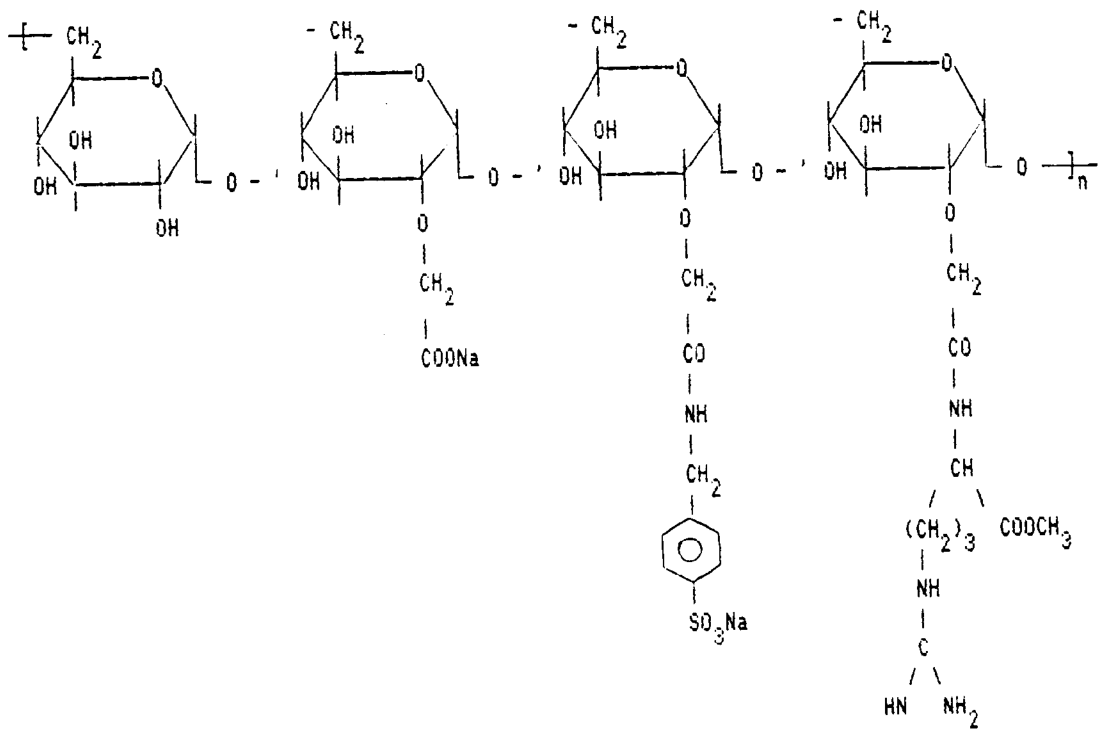

Exemple 6 : Préparation du matériau silice-DEAE agarose réticulé-fucane.

Première étape : Modification d'un agarose par des groupements DEAE

On utilise les agaroses commercialisés par la Société IBF sous les dénominations Indubioses A 37 HAA et A 37 NA. Ces agaroses sont modifiés par introduction de groupements DEAE de la manière suivante :

9,2 g d'agarose sont mis en solution dans 210 ml d'eau distillée, et le mélange est chauffé à 60°C, pendant 2 heures. 40 ml de solution aqueuse de NaCl (5,5 M), puis 11,5 g de chlorhydrate de chlorure de DEAE sont ajoutés au milieu. Après 15 mn, le produit est précipité par addition d'une solution méthanol-HCl (2% en volume), filtré et séché sous vide à 40°C pendant 15 heures. Le taux de substitution est déterminé par dosage acide-base et par analyse élémentaire, il est voisin de 10 méq de fonctions DEAE par gramme de produit sec.

Deuxième étape : Préparation du matériau silice-DEAE agarose réticulé.

Les silices XO 075 et XO 015, telles que définies ci-dessus, sont enrobées par le DEAE-agarose préparé à la première étape.

10 g de silice sont ajoutés doucement dans 25 ml de solution aqueuse alcaline (pH 11) de DEAE-agarose (8% en poids).

Le milieu réactionnel est agité doucement pendant 2 heures et, après imprégnation, le support est récupéré par filtration, séché sous vide à 80°C. 10 g de silice ainsi imprégnée sont mis en suspension dans 20 ml d'éther diéthylique à 40°C, avec 60 mg de BDDE (agent réticulant), pendant 30 mn. Le milieu réactionnel est chauffé à 80°C pendant 15 heures. La phase solide est recueillie, lavée successivement avec de la soude 0,1 M, une solution de NaCl 2 M et, finalement, de l'eau distillée. La quantité de polysaccharide qui enrobe la silice est déterminée par le taux de carbone obtenu par analyse élémentaire (entre 3 et 4% de C/g de support sec).

Troisième étape : Préparation du matériau de l'intitulé.

Le matériau obtenu à la deuxième étape est activé, puis couplé avec des fucanes selon le mode opératoire suivant :

2 g dudit matériau sont ajoutés dans 10 ml de dioxanne sec avec 0,5 g de CDI. On agite le mélange pendant 2 heures. Le produit solide est filtré et lavé avec 25 ml de dioxanne sec, puis avec 50 ml d'une solution aqueuse de carbonate de sodium 0,1 M (pH 8,7). Le produit est ensuite mis en suspension dans 10 ml de ce même tampon carbonate (pH 8,7) et on ajoute 100 mg de fucane (Sigma). Le mélange est agité pendant 48 heures

à température ambiante. On ajoute alors 200 mg de chlorure de sodium. Après 30 minutes, le produit solide est récupéré par filtration, lavé successivement par 50 ml de solution aqueuse de NaCl 2 M, 50 ml d'eau distillée, 10 ml de solution de tampon Tris-HCl 0,1 M (pH 8,7) afin de désactiver les groupes activés non couplés et finalement avec 50 ml d'eau distillée. Le taux de fucane fixé déterminé par dosage des fucanes libres dans le filtrat est voisin de 80% de la quantité de fucane initiale (43 mg de fucane par gramme de support sec).

Exemple 7 : Préparation du matériau silice-DEAE dextrane réticulé-dermatan sulfate.

4 g de silice enrobée par un DEAE-dextrane, préparée selon le mode opératoire décrit à l'Exemple 1, sont mis en suspension dans 30 ml d'éther éthylique sec, avec 10 µl de BDDE. Le mélange est agité à 40°C pendant 40 minutes. Le solvant est éliminé par évaporation douce. Le support ainsi activé est mis en suspension dans 30 ml d'une solution aqueuse alcaline (pH 10,5) contenant 500 mg de dermatan sulfate et agité pendant 1 heure. Le produit solide est récupéré par filtration, séché sous vide, puis lavé successivement avec 50 ml de solution de soude 0,1 M, 50 ml de NaCl 2 M et plusieurs fois avec 50 ml d'eau bidistillée. La quantité de dermatan sulfate fixée est déterminée par analyse élémentaire ; elle correspond à 65,1 mg de dermatan sulfate par gramme de support sec.

Exemple d'Application 1 : Purification de l'antithrombine III à partir de sérum ou de plasma humains ou animaux.

On a utilisé des matériaux tels que ceux des Exemples 1 et 2, le support de silice contenant de 10 à 100 mg d'héparine par gramme de gel sec (cas des matériaux du type de celui de l'Exemple 1) et de 60 à 200 mg de dextrane modifié par gramme de gel sec (cas des matériaux du type de celui de l'Exemple 2). Avec une colonne d'un volume de 2 ml, il est possible de retenir l'antithrombine III sur la colonne, en solution 0,1 M NaCl et d'éluer celle-ci à une concentration en NaCl plus élevée. Cette concentration est de 1,5 M NaCl avec un support à base d'héparine et 1,8 M NaCl avec un support à base de CMDBS dext.

La Figure 1 du dessin annexé représente une courbe d'élution dans une expérience typique.

Légende de la Figure 1 : Elution de l'anti-thrombine III sur silice-DEAE dext.-héparine

Eluant : 0,02 M Tris-HCl, pH 7,4
Colonne : 0,7 x 5 cm
Débit : 1 ml/minute
Abscisses : Volume d'élution (VE) en ml
Ordonnées : Densité optique DO à 280 nm (courbe 1) Concentration molaire de NaCl dans l'éluant (courbe 2)

Exemple d'Application 2 : Purification de la thrombine

La Figure 2 du dessin annexé représente une courbe d'élution dans une expérience.

Légende de la Figure 2 : Elution de la thrombine sur silice-DEAE-dext.-héparine : identique à celle de la figure 1

Exemple d'Application 3 : Elution du plasma humain pauvre en plaquettes.

La Figure 3 du dessin annexé représente une courbe d'élution dans une expérience typique.

Le pic observé, élué à la force ionique d'environ 0,8M NaCl, est celui de l'antithrombine III.

Légende de la Figure 3: identique à celle des figures 1 et 2

Exemple d'Application 4 : Purification du facteur de croissance du type "Fibroblast Growth Factor" acide (aFGF) à partir d'un extrait brut de cerveau de boeuf.

Avec une colonne contenant 1,6 ml de gel constitué de même type de support que précédemment, on fait passer sur ce gel, à la température ambiante, 15 ml de l'extrait brut en solution 0,1 M NaCl. Un gradient de concentration de sel est alors appliqué sur la colonne, et le facteur de croissance présentant une activité biologique sur cellules transformées marquées à la thymidine tritiée est élué par augmentation de la concentration saline : cette concentration est en fait de 1,2 M NaCl avec le support de silice à base d'héparine et 1,3 M NaCl

avec le support à base du CMDBS dext.

Exemple d'application 5 : Séparation des facteurs de croissance acide et basique issus du cerveau de boeuf.

25 ml d'extrait de cerveau de boeuf sont injectés dans un système chromatographique comprenant une colonne HPLC (0,7 x 3 cm) remplie du matériau de l'Exemple 1. Le tampon d'élution initial est une solution de Tris-HCl 0,01 M, NaCl 0,5 M (pH 7,0). Après injection, la colonne est éluée longuement avec le tampon initial (350 minutes) à un débit de 1 ml/minute, pour éliminer toutes les protéines indésirables et obtenir ainsi des fateurs très purs. Puis la force ionique de l'éluant est augmentée progressivement au moyen d'un gradient de composition jusqu'à 2M NaCl. Un premier pic d'élution contenant les facteurs de croissance est ainsi collecté. Le support est finalement élué pendant 10 minutes avec une solution de tampon Tris-HCl 0,01M, NaCl 2M, puis NaCl 3M, afin d'éluer toutes les protéines fixées sur le support. Une dernière étape permet de rééquilibrer le support dans le tampon initial.

La Figure 4 du dessin annexé représente le chromatogramme de aFGF sur le matériau-support de l'Exemple 1.

Légende de la Figure 4 :

Colonne : 0,7 x 0,3 cm
Débit : 1 ml/minute
Echantillon : 25 ml d'extrait
Tampon A : 0,01M Tris-HCl, 0,5M NaCl pH 7,0
Tampon B : 0,01M Tris-HCl, 3,0M NaCl pH 7,0
Abscisses et ordonnées: comme sur les figures 1 à 3

L'étude par électrophorèse sur gel de polyacrylamide montre que les fractions collectées lors du gradient contiennent les facteurs de croissance. Le taux d'enrichissement de ces protéines, présentes en faible quantité dans l'extrait de cerveau de boeuf, est important, et la purification est obtenue sans dégradation apparente des facteurs de croissance, lesquels conservent leur activité biologique (déterminée par la méthode à la thymidine tritiée).

Exemple d'application 6 : Séparation du deuxième co-facteur de l'héparine (HC II).

Une colonne HPLC (12,5 x 0,4 cm) remplie avec 2 g du matériau préparé selon le mode opératoire décrit à l'Exemple 6, est éluée avec une solution de tampon phosphate 0,05 M, (pH 7,4). On injecte 5 ml de plasma humain normal. Le pic important obtenu (4,5 ml) après l'injection est collecté. Il contient 0,98 U d'antithrombine III (AT III)/ml et 0,19 U de HC II/ml, ainsi que de nombreuses autres protéines plasmatiques (albumine; transferrine, etc.). Après retour à la ligne de base du signal du détecteur, on augmente la force ionique de l'éluant en percolant une solution du même tampon (pH 7,4) contenant du NaCl 0,5 M. Des protéines fixées dur le support sont alors décrochées et le pic d'élution est collecté (9,8 ml). Le dosage de l'activité anticoagulante de cette dernière fraction montre qu'elle contient essentiellement du HC II (4,8 unités) et une très faible proportion d'AT III (environ 0,1 unité). Le HC II ainsi obtenu correspond à 95% de la quantité initiale de HC II présent dans les 5 ml de plasma. L'activité spécifique de la protéine ainsi purifiée est de 4,15 U/mg, ce qui correspond à un enrichissement très important de cette protéine en une seule étape de purification.

Exemple d'application 7 : Purification du facteur II activé à partir d'un plasma humain ou d'une fraction issue du plasma humain.

Le support présente une couche bifonctionnelle constituée d'un dextrane tel que défini à l'Exemple 5 ou bien d'un polymère tel que décrit dans le brevet français n° 2 548 193. Le support de silice contient de 10 à 100 mg de polymère biofonctionnel par gramme de gel sec. Avec une colonne d'un volume de 2 ml, il est possible d'isoler la thrombine d'un mélange de 5 ml constitué du facteur II totalement activé en facteur IIa, et des facteurs VII, IX et X.

Le mélange des protéines est déposé sur la colonne. Après des lavages en solution tampon initiale (Tris-HCl 0,05 M, NaCl 0,1 M, pH 7,4), un gradient linéaire de force ionique de 0,1 M à 2,5 M NaCl est appliqué sur la colonne. La fraction éluée à concentration 0,8 M NaCl contient 70% de l'activité biologique de la thrombine déposée.

La thrombine ainsi isolée a une activité spécifique de 3000 u NIH (National Institute for Health) par mg de

protéine sèche. Le procédé permet donc, soit d'éliminer les traces de facteur IIa présentes dans la solution constituée des facteurs II, VII, IX et X (pour le traitement des hémophiles B), soit de purifier la thrombine.

Exemple d'Application 8 :

D'une manière similaire à celle de l'exemple 7, on peut effectuer la séparation du facteur X activé à partir d'un plasma humain, d'une fraction issue du plasma humain ou d'une solution de facteur X contenant des traces de facteur Xa.

Le support utilisé présente alors une couche de polymère biofonctionnel constitué :

– soit d'héparine ou de polysaccharides,

– soit de dextranes modifiés par des groupes carboxyliques et sulfonates ou sulfonates et amino-acides (sulfamide ou amide d'amino-acides, de type $-SO_2-NH-CHR-COOH$ ou $-CH_2-CO-NH-CHR-COOH$) avec R = chaîne latérale d'un amino-acide.

## Revendications

1. Matériau granulaire , capable de fixer des substances biologiques , caractérisé par le fait qu'il est constitué d'un support poreux granulaire, porteur de charges négatives ou positives , revêtu sur sa surface par des couches successives, à savoir :

– une première couche d'imprégnation d'un polymère hydrophile , porteur de charges opposées à celles du support , la quantité desdites charges présentes sur ledit polymère étant sensiblement égale à celle des charges présentes à la surface du support ; et

– une autre couche , fixée à la première par couplage chimique irréversible , d'un autre polymère hydrophile , fonctionnel , à savoir portant des fonctions conférant audit polymère hydrophile fonctionnel une affinité spécifique mais réversible pour au moins une substance biologique ( polymère biofonctionnel ).

2. Matériau granulaire , capable de fixer des substances biologiques , selon la revendication 1, caractérisé par le fait qu'il est constitué d'un support poreux granulaire , porteur de charges négatives ou positives , revêtu sur sa surface par des couches successives , à savoir :

– une première couche d'imprégnation d'un polysaccharide , porteur de charges opposées à celles du support , la quantité desdites charges présentes sur ledit polysaccharide étant sensiblement égale à celle des charges présentes à la surface du support ; et

– une autre couche, fixée à la première par couplage chimique irréversible , d'un autre polymère hydrophile , fonctionnel , à savoir portant des fonctions conférant audit polymère hydrophile fonctionnel une affinité spécifique mais réversible pour au moins une substance biologique (polymère biofonctionnel).

3. Matériau selon l'une des revendications 1 et 2, caractérisé par le fait qu'au moins une couche intermédiaire d'un polymére hydrophile est insérée et fixée à la première couche (ou à la couche précédente) par couplage chimique, avant fixation de la couche du polymère biofonctionnel.

4. Matériau selon l'une des revendications 1 à 3, caractérisé par le fait que le support poreux granulaire est un support minéral.

5. Matériau selon la revendication 4, caractérisé par le fait que le support minéral est choisi parmi la silice, l'alumine, les dérivés synthétiques ou naturels des verres, les silicates et le kaolin.

6. Matériau selon la revendication 5, caractérisé par le fait que le support poreux est une silice native porteuse de groupes silanol chargés négativement, le polymère hydrophile ou le polysaccharide constituant la premiére couche d'imprégnation étant alors porteurs de fonctions cationiques capables de compenser les char,es anioniques de la silice native.

7. Matériau selon la revendication 6, caractérisé par le fait que la silice native présente une taille moyenne comprise entre 5 et 300 μm, un diamétre Moyen de pores compris entre 5 et 400 nm, et une surface moyenne spécifique comprise entre 5 et 500 $m^2/g$.

8. Matériau selon l'une des revendications 6 et 7, caractérisé par le fait que les fonctions cationiques portées par le polymére hydrophile ou le polysaccharide sont des fonctions diéthylaminoéthyle (DEAE).

9. Matériau selon l'une des revendications 2 à 7, caractérisé par le fait que le polysaccharide constituant la première couche et les couches intermédiaires éventuelles est choisi parmi les dextranes, les agaroses et autres polysaccharides naturels ou synthétiques, hydrosolubles.

10. Matériau selon l'une des revendications 1 à 9, caractérisé par le fait que le polymère bifonctionnel est fixé au polymère constituant la couche précédente au moyen d'un agent de couplage, tel que les bis-époxirannes, le carbonyldiimidazole (CDI), la N-éthoxycarbonyl-2-éthoxy-1,2-dihydroquinoléine (EEDQ), un tel agent pouvant également être utilisé pour fixer entre elles les couches intermédiaires dans le cas où de telles

couches sont envisagées.

11. Matériau selon l'une des revendications 1 à 10, caractérisé par le fait que le polymère biofonctionnel présente une affinité vis-à-vis des substances biologiques, soit par sa nature même, soit par suite de modifications chimiques.

12. Matériau selon la revendication 11, caractérisé par le fait que les fonctions conférant l'affinité vis-à-vis des substances biologiques sont de type carboxylique et/ou sulfonate et/ou amino-acides et leurs dérivés, en proportions variables.

13. Matériau selon l'une des revendications 1 à 12, caractérisé par le fait que le polymère biofonctionnel, hydrosoluble, est choisi parmi les polysaccharides, tels que les héparines, les héparines modifiées, les fucanes, le dermatan sulfate, les héparans sulfates, et autres polysaccharides naturels ou modifiès, les polyméres vinyliques, tels que dérivés de polystyrène, les polyacrylates ou les polydiènes, les polyuréthannes, et les polymères porteurs d'amino-acides, de peptides, de ligands, de récepteurs cellulaires et de colorants.

14. Matériau selon la revendication 13, caractérisé par le fait que le polymère biofonctionnel hydrosoluble est un dérivé du dextrane correspondant à la formule générale (I):

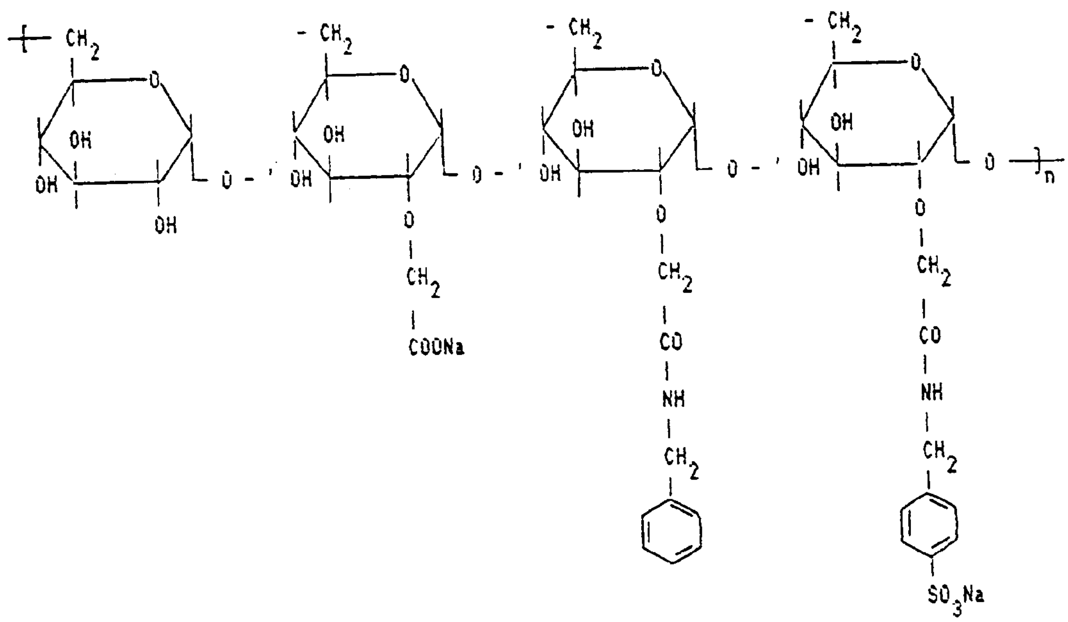

(I)

(A) (B) (C) (D)

dont la proportion des motifs (A), (B), (C) et (D) est variable ;
ou un dérivé du dextrane où les motifs (C) et (D), présentés dans la formule précédente, sont remplacés par des motifs (E) :

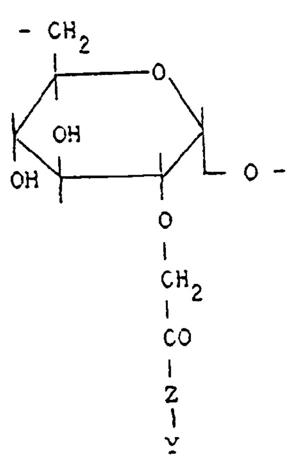

(E)

où :

– Z représente une simple liaison ou une chaîne d'espacement telle que $-(CH_2)_m-$ avec m = entier supérieur ou égal à 1 : et

– Y représente un ou plusieurs restes d'amino-acides ou de leurs dérivés ;

ou un dextrane dont la chaîne est substituée par un ou plusieurs groupes , identiques ou différents,appartenant aux catégories suivantes :

– $Z_1$-$A_1$

– $Z_1$-$A_1$-$Z_2$-$A_2$

– $Z_1$-$A_1$-$A_3$-$A_2$

– $Z_1$-$A_1$-$A_4$

où:

– $Z_1$ représente une chaîne d'espacement;

– $Z_2$ représente une chaîne de liaison ;

– $A_1$ représente un reste phosphate ;

– $A_2$ représente le reste d'une base purique ou d'une base pyrimidique ;

– $A_3$ représente un reste de sucre ; et

– $A_4$ représente un reste d'une molécule intervenant dans la structure polaire de divers phospholipides .

15. Matériau selon l'une des revendications 1 à 14, caractérisé par le fait que le polymère constituant au moins l'une parmi la première couche et les couches intermédiaires éventuelles est réticulé , après imprégnation, par exemple , à l'aide de l'éther diglycidylique du butanediol-1,4 (BDDE) , de l'épichlorhydrine ou du glutaraldéhyde , l'agent de réticulation mis en oeuvre pour réticuler le polymère biofonctionnel pouvant également être choisi parmi les agents de réticulation précités .

16.Matériau selon l'une des revendications 1 à 15, caractérisé par le fait que les substances biologiques sont les protéines , les protéases, les anticorps , les antigènes , les enzymes , les hormones et les cellules .

17.Procédé de purification ou de séparation de substances biologiques , caractérisé par le fait que l'on élue sur le matériau selon l'une des revendications 1 et 16 une solution contenant les substances biologiques que l'on souhaite purifier ou isoler , la couche de polymère biofonctionnel étant telle que le matériau fixe sélectivement , soit les molécules que l'on souhaite purifier ou isoler , soit les impuretés non désirées .

18. Procédé selon la revendication 17, caractérisée par le fait que les substances à purifier ou à concentrer sur les matériaux sont des cellules.

19. Utilisation du matériau tel que défini à l'une des revendications 1-16 pour la séparation et la purification d'antithrombine III à partir d'un matériel biologique contenant cette protéine, tel que sang , placenta , fractions plasmatiques , sérum .

20. Utilisation du matériau tel que défini à l'une des revendications 1-16 pour la séparation et la purification des facteurs de la coagulation, tels que les facteurs II , VII, VIII, IX, X , la protéine C et la protéine S , et de protéines telles que le cytochrome C , le plasminogène , le lysozyme et la fibronectine , à partir d'un matériel biologique contenant ces facteurs ou protéines , tel que sang , placenta, fractions plasmatiques , sérum .

21. Utilisation du matériau tel que défini à l'une des revendications 1-16, pour la séparation des facteurs activés de la coagulation, tels que les facteurs II activé , IX activé, X activé , dans des solutions contenant lesdits facteurs non activés .

22. Utilisation du matériau tel que défini à l'une des revendications 1-16 pour la concentration d'une solution de protéines très diluée en milieu aqueux et l'élimination de l'eau.

23. Utilisation du matériau tel que défini à l'une des revendications 1-16 pour la purification et la concentration des facteurs de croissance présentant une affinité pour l'héparine ou ses homologues , à partir d'extraits aqueux , par exemple de solutions tamponnées , contenant lesdits facteurs .

24. Utilisation du matériau tel que défini à l'une des revendications 1-16 pour la séparation et la purification du deuxième cofacteur de l'héparine , à partir d'un matériel biologique le contenant , tel que sang , placenta , fractions plasmatiques, sérum .

25. Utilisation du matériau tel que défini à la revendication 14, pour l'adsorption spécifique des différents types d'anticorps développés par les malades lupiques , anticorps anti-ADN, anticoagulants circulants et antiphospholipides .

26. Utilisation du matériau tel que défini à l'une des revendications 1 à 16 , pour l'immobilisation réversible de substances moléculaires , telles qu'antigènes , anticorps , enzymes.

## Patentansprüche

1. Körniges Material, das befähigt ist, biologische Substanzen zu binden, dadurch gekennzeichnet, daß

es aus einem porösen körnigen Träger gebildet ist, Träger negativer oder positiver Ladungen, auf seiner Oberfläche versehen mit aufeinanderfolgenden Schichten, nämlich:

– einer ersten Imprägnierungsschicht eines hydrophilen Polymers, Träger von Ladungen, die denen des Trägers entgegengesetzt sind, wobei die Menge der Ladungen, die auf dem Polymer vorhanden sind, etwa gleich ist der Menge Ladungen, die auf der Oberfläche des Trägers vorhanden sind; und

– einer weiteren Schicht, gebunden an die erste durch irreversible chemische Kupplung, eines anderen hydrophilen Polymers, das funktionalisiert ist, nämlich Funktionen trägt, die dem hydrophilen funktionellen Polymer eine spezifische, aber reversible Affinität für wenigstens eine biologische Substanz verleidt (biofunktionelles Polymer).

2. Körniges Material nach Anspruch 1, das befähigt ist, biologische Substanzen zu binden, dadurch gekennzeichnet, daß es aus einem porösen körnigen Träger gebildet ist, Träger negativer oder positiver Ladungen, auf seiner Oberfläche versehen mit aufeinanderfolgenden Schichten, nämlich:

– einer ersten Imprägnierungsschicht eines Polysaccharids, Träger von Ladungen, die denen des Trägers entgegengesetzt sind, wobei die Menge der Ladungen, die auf dem Polysaccharid vorhanden sind, etwa gleich ist der Menge Ladungen, die auf der Oberfläche des Trägers vorhanden sind; und

– einer weiteren Schicht, gebunden an die erste durch irreversible chemische Kupplung, eines anderen hydrophilen Polymers,das funktionalisiert ist, nämlich Funktionen trägt, die dem hydrophilen funktionellen Polymer eine spezifische, aber reversible Affinität für wenigstens eine biologische Substanz verleiht (biofunktionelles Polymer).

3. Material nach einem der Ansprüche 1 und 2, dadurch gekennzeichnet, daß vor der Bindung der Schicht des biofunktionellen Polymers wenigstens eine Zwischenschicht eines hydrophilen Polymers eingefügt und durch chemische Kupplung an die erste Schicht (oder an die vorhergehende Schicht) gebunden wird.

4. Material nach einem der Ansprüche 1 bis 3, dadurch gekennzeichnet, daß der poröse körnige Träger ein mineralischer Träger ist.

5. Material nach Anspruch 4, dadurch gekennzeichnet, daß der mineralische Träger ausgewählt ist aus Siliciumdioxid, Aluminiumoxid, synthetischen oder natürlichen Glas-Derivaten, Silicaten und Kaolin.

6. Material nach Anspruch 5, dadurch gekennzeichnet, daß der poröse Träger ein natürliches Siliciumdioxid ist, das negativ geladene Silanol-Gruppen trägt, wobei das hydrophile Polymer oder das Polysaccharid das die erste Imprägnierungsschicht bildet, so Träger kationischer Funktionen ist , die die anionischen Ladungen auf dem natürlichen Siliciumdioxid kompensieren können.

7. Material nach Anspruch 6, dadurch gekennzeichnet, daß das natürliche Siliciumdioxid eine mittlere Größe zwischen 5 und 300 μm, einen mittleren Porendurchmesser zwischen 5 und 400 nm und eine mittlere spezifische oberfläche zwischen 5 und 500 $m^2/g$ aufweist.

8. Material nach einem der Ansprüche 6 und 7, dadurch gekennzeichnet, daß die von dem hydrophilen Polymer oder dem Polysaccharid getragenen kationischen Funktionen Diethylaminoethyl(DEAE)-Funktionen sind.

9. Material nach einem der Ansprüche 2 bis 7, dadurch gekennzeichnet, daß das Polysaccharid die erste Schicht bildet, und die möglichen Zwischenschichten ausgewählt sind aus Dextranen, Agarosen und anderen wasserlöslichen natürlichen oder synthetischen Polysacchariden.

10. Material nach einem der Ansprüche 1 bis 9, dadurch gekennzeichnet, daß das biofunktionelle Polymer an das Polymer, das die vorhergehende Schicht bildet, gebunden ist mit wenigstens einem Kupplungsreagens wie etwa Bis-epoxiranen, Carbonyldiimidazol (CDI), N-Ethoxycarbonyl-2-ethoxy-1,2-dihydrochinolin (EEDQ), wobei ein solches Reagens auch verwendet -werden kann, um die Zwischenschichten, sofern diese vorgesehen sind, aneinander zu binden.

11. Material nach einem der Ansprüche 1 bis 10, dadurch gekennzeichnet, daß das biofunktionelle Polymer Affinität gegenüber biologischen Substanzen aufweist, sei es durch seine eigene Beschaffenheit, sei es durch nachfolgende chemische Modifizierung.

12. Material nach Anspruch 11, dadurch gekennzeichnet, daß die gegenüber biologischen Substanzen Affinität verleihenden Funktionen vom Carboxyl- und/oder Sulfonat- und/oder Aminosäure-Typ und deren Derivaten in wechselnden Anteilen sind.

13. Material nach einem der Ansprüche 1 bis 12, dadurch gekennzeichnet, daß das wasserlösliche biofunktionelle Polymer ausgewählt ist aus Polysacchariden wie etwa Heparinen, modifizierten Heparinen, Fucanen, Dermatansulfat, Heparansulfaten und anderen natürlichen oder modifizierten Polysacchariden; vinylpolymeren wie etwa Polystyrol-Derivaten; Polyacrylaten oder Polydienen, polyurethanen sowie Polymeren, die Aminosäuren, Peptide, Liganden, Zellrezeptoren und Farbstoffe tragen.

14. Material nach Anspruch 19, dadurch gekennzeichnet, daß das wasserlösliche biofunktionelle Polymer ein Dextran-Derivat ist, entsprechend der allgemeinen Formel (I):

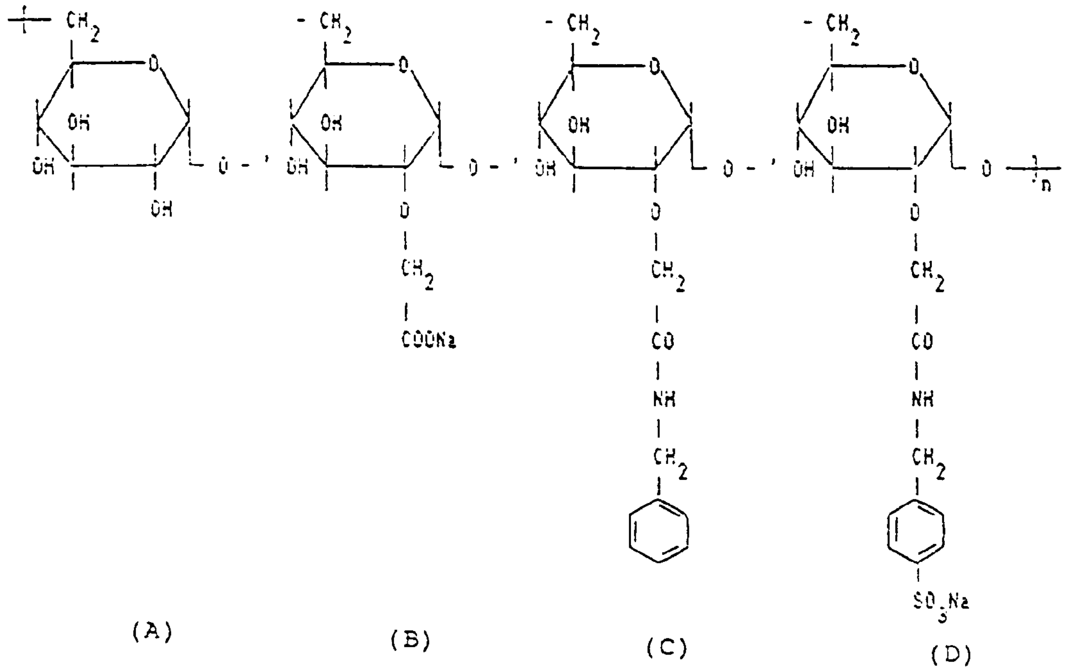

(I)

(A) (B) (C) (D)

worin der Anteil der Einheiten (A), (B), (C) und (D) variabel ist;
oder ein Dextran-Derivat, worin die Einheiten (C) und (D), dargestellt in der vorstehenden Formel, ersetzt sind durch die Einheiten (E):

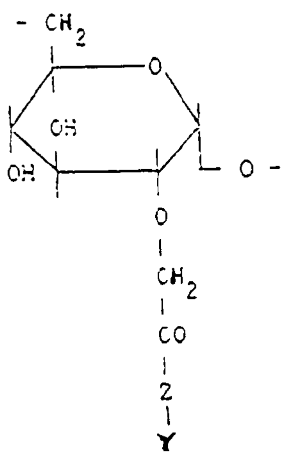

(E)

worin:

- Z eine Einfachbindung oder eine Abstandskette wie etwa $-(CH_2)_m-$ bedeutet, mit m = ganze Zahl größer oder gleich 1; und
- Y einen oder mehrere Aminosäure-Reste oder deren Derivate bedeutet;

oder ein Dextran, dessen Kette substituiert ist durch eine oder mehrere Gruppen, die gleich oder verschieden sind und zu folgenden Klassen gehören;

- $Z_1$-$A_1$
- $Z_1$-$A_1$-$Z_2$-$A_2$
- $Z_1$-$A_1$-$A_3$-$A_2$
- $Z_1$-$A_1$-$A_4$

worin

- $Z_1$ eine Abstandskette bedeutet;
- $Z_2$ eine Bindungskette bedeutet;
- $A_1$ einen Phosphat-Rest bedeutet;
- $A_2$ den Rest einer Purin-Base oder einer Pyrimidin-Base bedeutet;

– $A_3$ einen Zucker-Rest bedeutet; und

– $A_4$ einen Rest eines Moleküls bedeutet, wie er in der polaren Struktur verschiedener Phospholipide vorkommt,

15. Material nach einem der Ansprüche 1 bis 14, dadurch gekennzeichnet, daß das Polymer, das wenigstens eine Schicht bildet, ausgewählt aus der ersten und den möglichen Zwischenschichten, nach Imprägnierung vernetzt wird zum Beispiel mit Hilfe von 1,4-Butandioldiglycidylether (BDDE), Epichlorhydrin oder Glutaraldehyd, wobei das zur Vernetzung des biofunktionellen Polymers verwendete Vernetzungsmittel ebenfalls aus den vorerwähnten Vernetzungsmitteln ausgewählt sein kann.

16. Material nach einem der Ansprüche 1 bis 15, dadurch gekennzeichnet, daß die biologischen Substanzen Proteine, Proteasen, Antikörper, Antigenen, Enzume, Hormone und Zellen sind.

17. Verfahren zur Reinigung oder Trennung biologischer Substanzen, dadurch gekennzeichnet, daß auf dem Material nach einem der Ansprüche 1 bis 16 eine Lösung eluiert wird, die biologische Substanzen enthält, die gereinigt oder isoliert werden sollen, wobei die Schicht des biofunktionellen Polymers so beschaffen ist wie das Material, entweder die Moleküle, die gereinigt oder isoliert werden sollen, oder die unerwünschten Verunreinigungen selektiv bindet.

18. Verfahren nach Anspruch 17, dadurch gekennzeichnet, da$^+$ die auf diesen Materialien zu reinigenden oder anzureichernden Substanzen Zellen sind.

19. Verwendung des Materials nach einem der Ansprüche 1 bis 16 zur Abtrennung und Reinigung von Antithrombin III, ausgehend von einem biologischen Material, das dieses Protein enthält, wie etwa Blut, Plazenta, Plasmafraktionen und Serum.

20. Verwendung des Materials nach einem der Ansprüche 1 bis 16 zur Abtrennung und Reinigung von Koagulationsfaktoren wie etwa den Faktoren II, VII, VIII, IX, X, Protein C und Protein S, Proteinen wie etwa Cytochrom C, Plasminogen, Lysozym, Fibronectin, ausgehend von einem biologischen Material, das diese Faktoren oder Proteine enthält, wie etwa Blut, Plazenta, Plasmafraktionen und Serum.

21. Verwendung des Materials nach einem der Ansprüche 1 bis 16 zur Abtrennung von aktivierten Koagulationsfaktoren wie etwa den Faktoren II-aktiviert, IX-aktiviert, X-aktiviert, in Lösungen, die diese Faktoren nichtacktiviert enthalten.

22. Verwendung des Materials nach einem der Ansprüche 1 bis 16 zur Konzentrierung einer sehr verdünnten wäßrigen Lösung von Proteinen und zur Entfernung des Wassers.

23. Verwendung des Materials nach einem der Ansprüche 1 bis 16 zur Reinigung und Konzentrierung von Wachstumsfaktoren, die Affinität gegenüber Heparin und dessen Homologen zeigen, ausgehend von wäßrigen Extrakten, zum Beispiel gepufferten Lösungen, die diese Faktoren enthalten.

24. Verwendung des Materials nach einem der Ansprüche 1 bis 16 zur Abtrennung und Reinigung des zweiten Heparin-Cofaktors, ausgehend von einem diesen enthaltenden biologischen Material wie etwa Blut, Plazenta, Plasmafraktionen und Serum.

25. Verwendung des Materials nach Anspruch 14 zur spezifischen Adsorption unterschiedlicher Typen von Antikörpern, die für Lupus-Patienten entwickelt wurden, Anti-ADN-Antikörpern, Kreislauf-Antikoagulationsmitteln und Antiphospholipiden.

26. Verwendung des Materials nach einem der Ansprüche 1 bis 16 zur reversiblen Immobilisierung molekularer Substanzen wie etwa Antigenen, Antikörpern und Enzymen.

## Claims

1. A. granular material, capable of binding biological substances, caracterized in that it consists of a granular porous support bearing negative or positive charges, coated on its surface with successive layers, namely:

– a first layer of impregnation with a hydrophilic polymer, bearing charges opposite to those of the support, the quantity of said charges present on said polymer being substantially equal to that of the charges present at the surface of the support; and

– another layer, bound to the first by irreversible chemical coupling, of another hydrophilic polymer which is functional, namely bearing groups endowing said functional hydrophilic polymer with a specific but reversible affinity for at least one biological substance (biofunctional polymer).

2. A granular material, capable of binding biological substances according to claim 1, characterized in that it consists of a granular porous support, bearing negative or positive charges, coated on its surface with successive layers, namely:

– a first layer of impregnation with a polysaccharide, bearing charges opposite to those of the support, the quantity of said charges present on said polysaccharide being substantially equal to that of the charges present at the surface of the support; and

– another layer, bound to the first by irreversible chemical coupling, of another hydrophilic polymer which is functional, namely bearing groups endowing said functional hydrophilic polymer with a specific but reversible affinity for at least one biological substance (biofunctional polymer).

3. The material as claimed in one of claims 1 and 2, characterized in that at least one intermediate layer of a hydrophilic polymer is inserted and bound to the first layer (or to the preceding layer) by chemical coupling, before the binding of the layer of biofunctional polymer.

4. The material as claimed in one of claims 1 to 3, caracterized in that the granular porous support is an mineral support.

5. The material as claimad in claim 4, characterized in that the mineral support is chosen from silica, alumina, synthetic or natural derivatives of glasses, silicates and kaolin.

6. The material as claimed in claim 5, caracterized in that the porous support is a native silica bearing negatively charged silanol groups, the hydrophilic polymer or the polysaccharide constituting the first impregnation layer then bearing cationic groups capable of balancing the anionic charges of the native silica.

7. The material as claimed in claim 6, characterized in that the native silica possesses a mean size of between 5 and 300 μm, a mean pore diameter of between 5 and 400 nm and a mean specific surface area of between 5 and 500 $m^2/g$.

8. The material as claimed in one of claims 6 and 7, characterized in that the cationic groups borne by the hydrophilic polymer or the polysaccharide are diethylaminoethyl (DEAE) groups.

9. The material as claimed in one of claims 2 to 7, characterized in that the polysaccharide constituting the first layer, and the possible intermediate layers, is chosen from dextrans, agaroses and other water-soluble, natural or synthetic polysaccharides.

10. The material as claimed in one of claims 1 to 9, caracterized in that the biofunctional polymer is bound to the polymer constituting the preceding layer by means of a coupling agent such as bis(epoxiranes), carbonyldiimidazole (CDI) or N-ethoxycarbonyl-2-éthoxy-1,2-dihydroquinoline (EEDQ), it being possible for such an agent to be used also for binding the intermediate layers to one another in the case where such layers are envisaged.

11. The material as claimed in one of claims 1 to 10, caracterized in that the biofunctional polymer possesses an affinity with respect to biological substances, either by its very naturel or as a result of chemical modifications.

12. The material as claimed in claim 11, in which the groups endowing affinity with respect to biological substances are of the carboxyl and(or sulfonate and(or amino acid type, and derivatives thereof, in variable proportions.

13. The material as claimed in one of claims 1 to 12, caracterized in that the water-soluble biofunctional polymer is chosen from polysaccharides such as heparins, modified heparins, fucans, dermatan sulfate, heparan sulfates and other natural or modified polysaccharides, vinyl polymers such as polystyrene derivatives, polyacrylates or polydienes, polyurethanes and polymers bearing amino acids, bearing peptides, bearing ligands, bearing cell receptors and bearing colorants.

14. The material as claimed in claim 13, caracterised in that the water-soluble biofunctional polymer is a dextran derivative corresponding to the general formula (I):

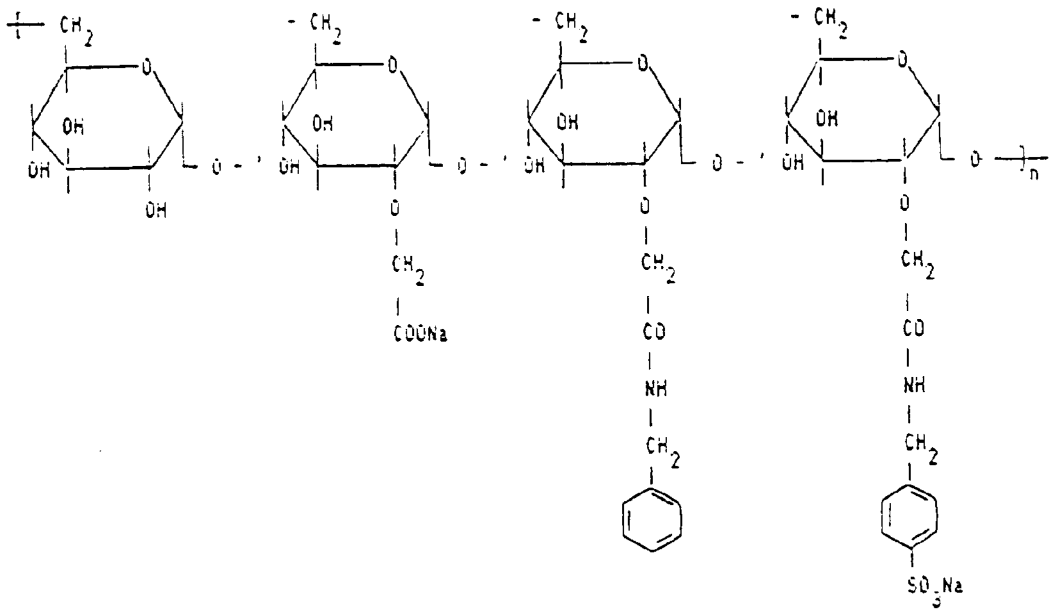

(I)

(A) (B) (C) (D)

in which the proportion of the units (A), (B), (C) and (D) is variable;
or a dextran derivative in which the units (C) and (D) shown in the above formula are replaced by units (E):

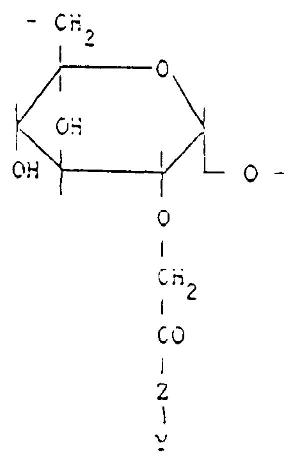

(E)

where:

- Z denotes a single bond or a spacer chain such as $-(CH_2)_m-$ with m = integer greater than or equal to 1; and
- Y denotes one or more amino acid residues or derivatives thereof;

or a dextran in which the chain is substituted with one or more identical or different groups belonging to the following categories:

- $Z_1$-$A_1$
- $Z_1$-$A_1$-$Z_2$-$A_2$
- $Z_1$-$A_1$-$A_3$-$A_2$
- $Z_1$-$A_1$-$A_4$

where:

- $Z_1$ denotes a spacer chain;
- $Z_2$ denotes a linking chain;
- $A_1$ denotes a phosphate residue;
- $A_2$ denotes the residue of a purine base or of a pyrimidine base;
- $A_3$ denotes a sugar residue; and

– $A_4$ denotes a residue of a molecule contributing to the polar structure of various phospholipids

15. The material as claimed in one of claims 1 to 14, caracterized in that the polymer constituting at least one of the first layer and possible intermediate layers is cross-linked, after impregnation, for example, by means of 1,4-butanediol diglycidyl ether (BDDE), epichlorhydrin or glutaraldehyde, it also being possible for the crosslinking agent employed for crosslinking the biofunctional polymer to be chosen from the abovementioned crosslinking agent.

16. The material as claimed in one of claims 1 to 15, caracterised in that the biological substances are proteins, proteases, antibodies, antigens, enzymes, hormones and cells.

17. The process for the purification or the separation of biological substances, caracterized in that a solution containing the biological substances which it is desired to purify or isolate is eluted on the material according to one of the claims 1 to 16, the layer of biofunctional polymer being such that the material selectively binds either the molecules which it is desired to purify or isolate, or the undesired impurities.

18. The use of the process according to claim 17, characterized in that the substances to be purified or concentrated on the materials are cells.

19. The use of the material as defined in one of the claims 1 to 16, for the separation and purification of antithrombin III from a biological material containing this protein, such as blood, placenta, plasma fractions, serum.

20. The use of the material as defined in one of the claims 1 to 16, for the separation and purification of coagulation factors such as factors II, VII, VIII, IX, X, protein C and protein S, and of proteins such as cytochrome C, plasminogen, lysozyme and fibronectin, from a biological material containing these factors or proteins, such as blood, placenta, plasma fractions, serum.

21. The use of the material as defined in one of the claims 1 to 16, for the separation of activated coagulation factors such as activated factor II, activated factor IX and activated factor X, in solutions containing said non-activated factors.

22. The use of the material as defined in one of the claims 1 to 16, for the concentration of a very dilute solution of proteins in aqueous medium and removal of the water.

23. The use of the material as defined in one of the claims 1 to 16, for the purification and concentration of growth factors possessing an affinity for heparin or its homologs, from aqueous extracts, for example buffered solutions, containing said factors.

24. The use of the material as defined in one of the claims 1 to 16 for the separation and purification of the second heparin cofactor from a biological material containing it, such as blood, placenta, plasma fractions, serum.

25. The use of the material as defined in claim 14 for the specific adsorption of the different types of antibodies developed by lupus patients, anti-DNA antibodies, circulating anticoagulants and antiphospholipids.

26. The use of the material as defined in one of claims 1 to 16, for the reversible immobilization of molecular substances such as antigen, antibodies and enzymes.

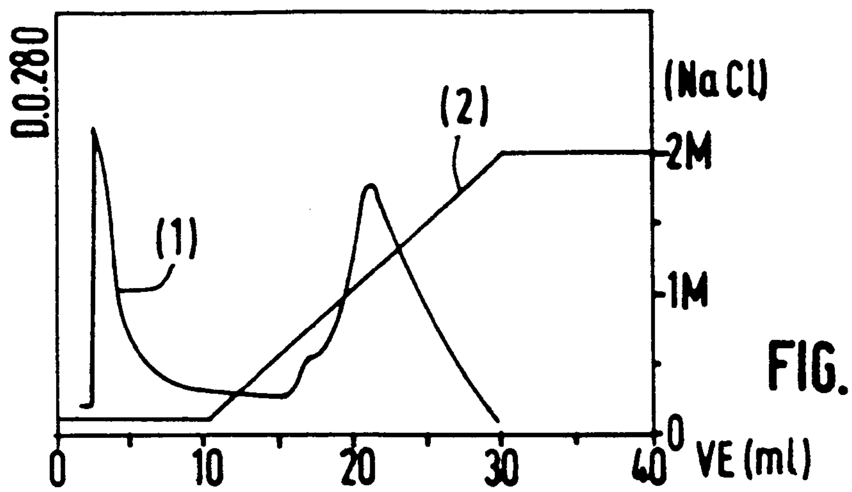


FIG.1

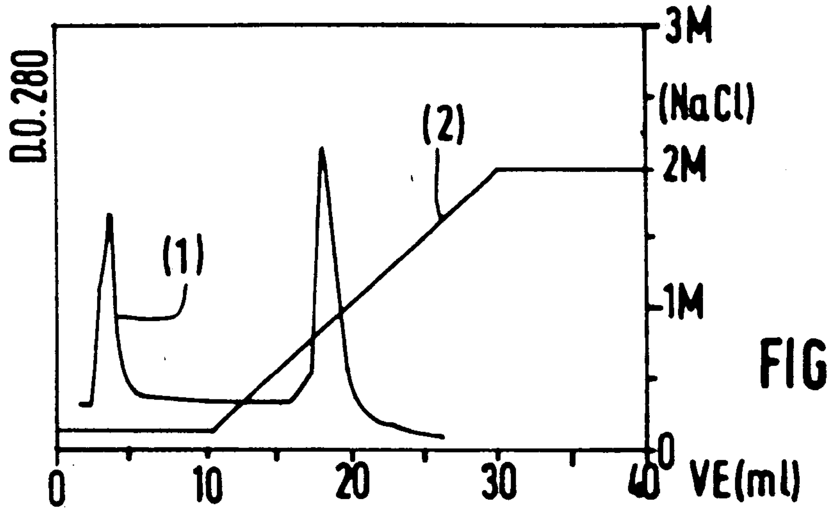


FIG.2

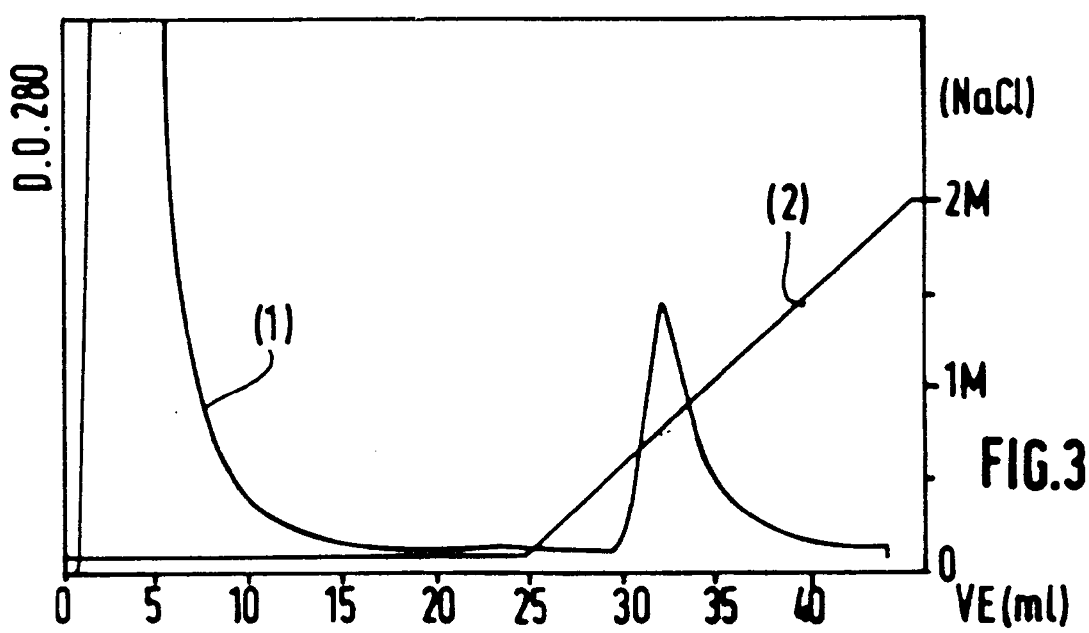


FIG.3

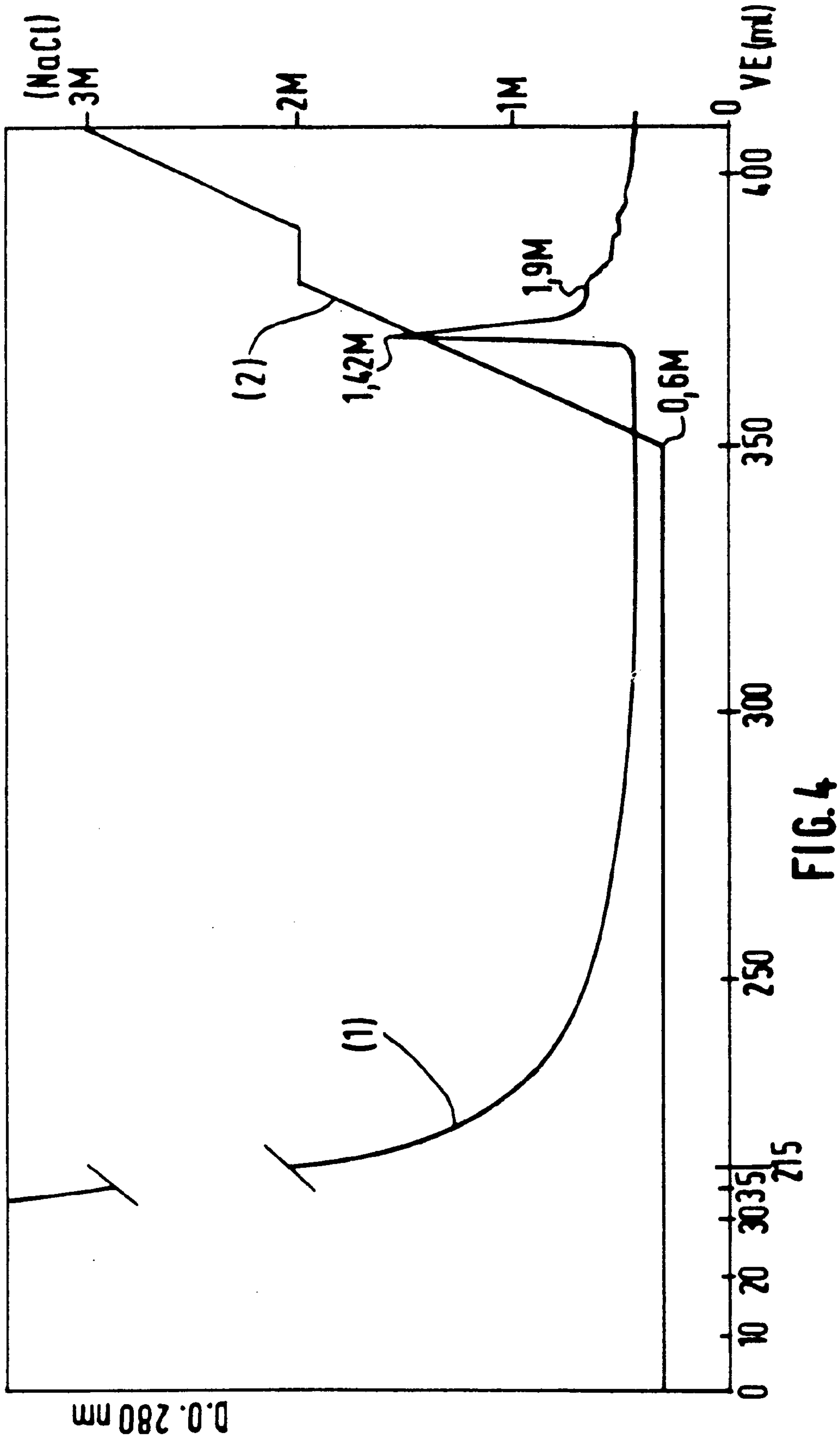

(NaCl)
3M
2M
1M
0
VE (ml)
400
350
300
250
215
35
30
20
10
0
1,9M
1,42M
0,6M
(1)
(2)
D.O. 280 nm


FIG. 4